# EUROPEAN PATENT SPECIFICATION

(11) **EP 2 075 553 B1**
(45) Date of publication and mention of the grant of the patent: **08.01.2014**
(21) Application number: 08169147.9
(22) Date of filing: 14.11.2008
(51) Int. Cl.: G01F 15/06, G01F 1/66

(54) **Battery driven consumption meter with voltage converter**
Batteriebetriebener Verbrauchsmesser mit Spannungswandler
Compteur de consommation alimenté par batterie doté d'un convertisseur de tension

(43) Date of publication of application: 01.07.2009
(73) Proprietor: KAMSTRUP A/S, 8660 Skanderborg (DK)
(72) Inventor: Drachmann, Jens, 8260, Viby J (DK)
(74) Representative: Plougmann & Vingtoft A/S

(56) References cited:
- WO-A-00/26739
- WO-A-02/091329
- WO-A-2005/073891
- WO-A-2006/127479
- WO-A1-2008/117531
- US-A1- 2003 137 286
- US-B1- 6 424 820
- CASCETTA F ET AL: "THE FUTURE DOMESTIC GAS METER: REVIEW OF CURRENT DEVELOPMENTS" MEASUREMENT, INSTITUTE OF MEASUREMENT AND CONTROL. LONDON, GB, vol. 13, no. 2, 1 April 1994 (1994-04-01), pages 129-145, XP000446371 ISSN: 0263-2241

## Description

### FIELD OF THE INVENTION

The invention relates to the field of consumption meters, such as high precision consumption meters for charging applications. Especially, the invention defines a low power battery driven consumption meter including a flow sensing unit.

### BACKGROUND OF THE INVENTION

Battery driven consumption meters intended for long-term operation, e.g. 15-20 years, without the need for maintenance must have electronic circuits with low electric power consumption. Typical batteries for such long-term operation are Lithium type batteries, and such batteries have a limited peak current capacity. Thus, circuits requiring high power drain from the battery in short periods, such as wireless radio communication interfaces during Radio Frequency transmission, are problematic to drive with such batteries, and if possible, the power efficiency is poor.

WO 2008 11753 discloses such a battery driven consumption meter with wireless radio communication interface.

Of course, a larger battery or application of several batteries can be used to provide a higher peak current capacity, however this solution has the disadvantages of high costs and large space requirements, and still the power efficiency is rather poor.

### SUMMARY OF THE INVENTION

It may be seen as an object of the present invention to provide an improved battery driven consumption meter with low power consumption and still with the peak current capacity to drive a radio communication interface.

The present invention provides a consumption meter arranged to measure an amount of a physical entity, the consumption meter including
- a flow sensing unit, such as an ultrasonic flow sensing unit, arranged to perform a measurement on the physical entity, and to generate data representing an amount of flow accordingly,
- a radio communication interface arranged to transmit a Radio Frequency signal representing the amount of the physical entity
- a battery exhibiting a battery voltage, wherein the battery is arranged to generate electric supply power for the flow sensing unit and the radio communication interface, and
- a voltage converter connected to the battery so as to convert the battery voltage to a second voltage being lower than the battery voltage,
wherein the radio communication interface is arranged for at least partly being powered by the second voltage.

Thus, the meter is power by a supply circuit including the battery and the voltage converter. The flow sensing unit may be powered directly by the battery voltage, or it may be powered also via the voltage converter. By converting the battery voltage, which is often fixed by the specific type of battery, it is possible to provide a lower voltage which may still be able to supply the required supply voltage to drive the radio communication interface. At the same time, an improved power efficiency can be obtained, because the lower supply voltage means that high currents drawn during RF transmission will be easier to handle for the battery, because the current drawn from the battery will be reduced compared to the situation where the full battery voltage was used to supply the radio communication interface. Thus, even though the voltage converter in itself will consume some energy, it is possible to obtain an increased power efficiency upon appropriate selection of the voltage conversion factor to suit the specific circuits in question. This is due to the fact that especially radio communication circuits consume less power when operated at a voltage lower than the typical battery voltage 3.6V for Lithium batteries. In the following, preferred embodiments with further reduction of power loss in the voltage converter will be described.

The voltage converter includes a non-linear regulator, such as a switch-mode circuit, to convert the battery voltage to the second voltage. Such non-linear regulator is commercially available in version with very high power conversion efficiency, and thus the improved power efficiency will not be completely lost due to losses in the voltage converter in itself. A non-linear regulator will conserve the power (voltage multiplied by current), and thus reduce the current with a factor corresponding to the ration between input and output voltage of the non-linear regulator.

A sensing element arranged to sense a current consumption of the radio communication interface is connected so as to disable the non-linear regulator upon the sensing element sensing a current consumption of the radio communication interface being lower than a predetermined threshold value. Hereby power can be saved to drive the non-linear regulator in situations where it is not required, because only a limited current is drawn by the radio communication interface, a current that can be handled by the battery directly, if required at all. In an implementation, a voltage across the sensing element is used to enable or disable the non-linear regulator, such as by a voltage across the sensing element providing an input to an electric switch connected to an enable input of the non-linear regulator. Especially, a single resistor can be used to implement the current sensing element.

The non-linear regulator may be connected with a feedback loop to provide the non-linear regulator with a feedback of the second voltage, and wherein a current consumption of the feedback loop is eliminated according with disablement of the non-linear regulator. Hereby power to e.g. a voltage divider serving as feedback loop, can be saved when not required, e.g. by means of an electric switch serving to connect or disconnect the feedback loop, wherein the electric switch is controlled by the sensing element, e.g. the electric switch can be controlled by a voltage across a current sensing resistor. Especially a single transistor (bipolar or FET) can be used to implement the electric switch.

An electrical by-pass connector may be included, i.e. an electric connector arranged to by-pass the voltage converter, such as an electrical by-pass connector connecting voltage input and voltage output of the voltage converter. Hereby it is possible to supply voltage directly from the battery in periods where the voltage converter is disabled. The electrical by-pass connector may include a resistor, such as the electrical by-pass connector being a single resistor connected between voltage input and voltage output of the voltage converter. The by-pass connector and the sensing element may especially be implemented by one or more common elements, such as implemented by a single resistor serving the function of current sensing element as well as a by-pass connector. Especially, the by-pass connector may be arranged to supply sufficient electric power to maintain a stand-by activity of the radio communication interface in periods where the non-linear regulator is disabled. Thus, it is possible to maintain all registers etc. ready in the radio communication interface without the need for the voltage converter being active, and then the radio communication interface will be quickly ready for RF transmission, when required, and thus the period where the voltage converter is required is reduced, thereby saving power to drive the voltage regulator itself.

To save further power in the voltage converter when not required, the supply circuit may include a switch arranged to disconnect a supply voltage to the voltage converter, such as an electric switch operating according to an input provided by the sensing element as described earlier.

It may be required for some low voltage circuits of the meter to be supplied by an even lower voltage than the second voltage. Thus, the meter may include a linear regulator arranged to convert the second voltage to a third voltage being lower than the second voltage.

The flow sensing unit and the radio communication interface may be powered by different supply voltages, such as the battery voltage and the second voltage, respectively, and wherein the flow sensing unit and the radio communication interface are interconnected via a level shifter so as to ensure proper communication voltage levels between the radio communication interface and the flow sensing unit.

The voltage converter may be arranged to generate supply power to at least one further element of the consumption meter, such as one of: a display, and an optical communication interface.

The flow sensing unit may be arranged for at least partly being powered by the second voltage. Certain types of flow sensing circuits exhibit the same significantly different current requirements as a function of time as described for the radio communication interface, e.g. circuits requiring high currents during rather short periods where power consuming measurement transducers are driven. Thus, in order to save power, such circuits may in the same way be powered by a lower voltage, i.e. the second voltage, in periods with high current requirement, while powered directly by the battery voltage in periods with lower current requirements.

The radio communication interface may be operated in a discontinuous manner, such as operated in a manner requiring significant different supply current in different periods. This is typical in a remote reading consumption meter, where the power consuming transmission only occupies a small fraction of normal operation time. The above described supply circuit embodiments where the voltage converter, preferably non-linear regulator, can be enabled and disabled according to current needs of the radio communication interface.

To obtain a power saving effect, the second voltage is preferably below 75% of the battery voltage, such as below 50% of the battery voltage, or such as below 30% of the battery voltage. With a 3.6 V battery, a preferred second voltage range will be such as 0.9 V to 2.5 V. Of course, the actual choice depends on the voltage rating of the circuits in question.

The consumption meter may be: a water meter, a heat meter, a cooling meter, or a gas meter. The flow sensing unit is preferably an ultrasonic flow sensing unit.

In general the various aspects and advantages of the invention may be combined and coupled in any way possible within the scope of the invention.

### BRIEF DESCRIPTION OF THE DRAWINGS

Embodiments of the invention will be described, by way of example only, with reference to the drawings, in which
FIG. 1 illustrates a sketch of a diagram of basic parts of an embodiment, and
FIG. 2 illustrates an electric diagram of a preferred supply circuit for a consumption meter.

### DESCRIPTION OF EMBODIMENTS

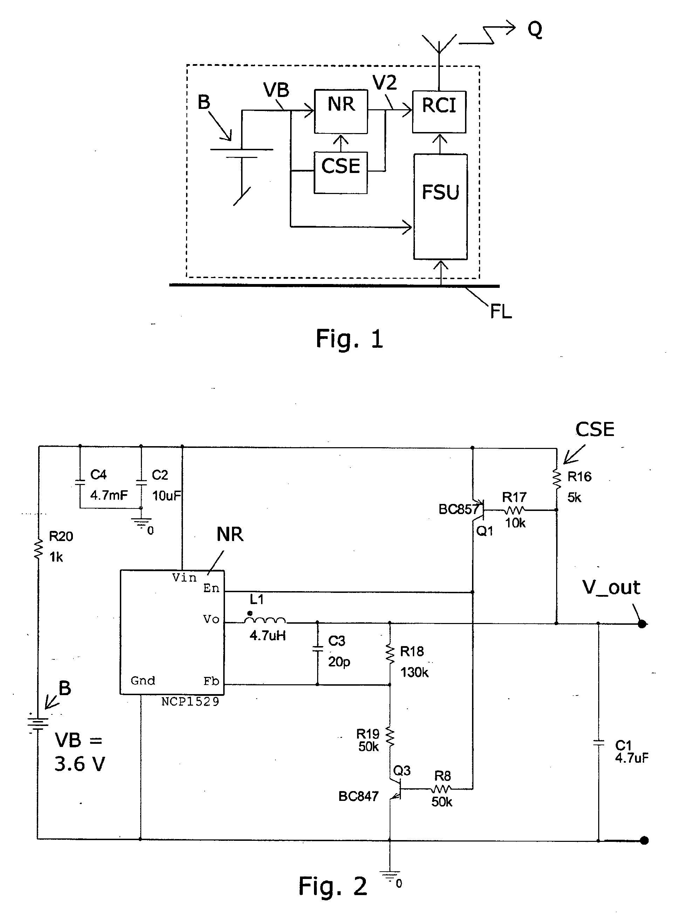

Fig. 1 illustrates a consumption meter (dashed box) embodiment connected to sense an amount of fluid flow in a fluid line FL, e.g. a cold water pipe to for supply of cold water to a consumer. A flow sensing unit FSU, e.g. with an ultrasonic flow sensor, performs measurements on the fluid flow in the fluid line FL and generates a value representing a consumed amount of fluid Q. This value Q is applied to a radio communication interface RCI that transmits a Radio Frequency signal with the consumed amount value Q represented therein. All circuits of the consumption meter are supplied by electric power by a battery B mounted within a casing housing electronic components of the consumption meter. The battery B exhibits a battery voltage VB, e.g. a Lithium type battery B with battery voltage VB = 3.6 V.

In this embodiment, the battery voltage VB is applied directly to supply power input of the flow sensing unit FSU. The radio communication interface RCI is supplied with electric power via a voltage converter in the form of a non-linear regulator NR, preferably a switch mode circuit. The non-linear regulator NR converts the battery voltage VB to a lower second voltage V2. The radio communication interface RCI is the supplied with power at this reduced voltage V2. The second voltage V2 can be such as 75% or 50% of the battery voltage. Thus, the flow sensing unit FSU and the radio communication interface RCI have different supply voltages, and this may require a level shifter connected between these to units FSU, RCI so as to convert a communication output voltage, e.g. for communicating the measured value Q, from the flow sensing unit FSU to an appropriate input voltage level for the radio communication interface RCI. It is to be understood, however, that the flow sensing unit FSU may in other embodiments be supplied by the second voltage V2 instead of directly by the battery voltage VB, i.e. via the non-linear regulator NR. Especially, of course the use of a non-linear voltage converter NR is advantageous in case low voltage circuit components are used, i.e. components with a rated voltage significantly below the voltage provided by the battery VB. Hereby power loss in a voltage divider can be avoided.

One advantage obtained by converting the battery voltage VB to a lower voltage V2 for supply of power to the radio communication interface RCI is that peak currents drawn by the radio communication interface RCI during RF transmission can easily be overcome by the battery B, since the current drawn from the battery B will be scaled down with the ratio between the battery voltage VB and the lower voltage V2. In this way, power efficiency can be improved.

However, the non-linear regulator NR will itself consume power, and thus to reduce this power consumption, a current sensing element CSE is introduced to sense a current consumption by the radio communication interface RCI. In a simple form such current sensing element CSE is a resistor connected to by-pass the non-linear regulator NR, i.e. between the battery voltage VB and the second voltage V2. A voltage across such current sensing resistor CSE can then be used to disable, e.g. switch off, the non-linear regulator NR when the current drawn is below a predetermined threshold value. At the same time, the current sensing resistor CSE serves as a by-pass of the non-linear regulator and thus serves to supply the battery voltage VB to the radio communication interface RCI when the current demand is low and the non-linear regulator NR is disabled. Hereby the radio communication interface can maintain a stand-by mode of operation, such as keeping register values etc. in periods between the current demanding RF transmissions, while power to the non-linear regulator NR is saved since the non-linear regulator NR is not required in such periods.

Fig. 2 illustrated an electric diagram of an implementation of a circuit for supply of power to a radio communication interface based on power from a battery B. As seen, the non-linear regulator NR is here implemented with one commercially available switch-mode based voltage converter chip with a supply voltage input Vin, an enable input En, an output voltage output Vo, a feedback input Fb, as well as an electric ground connector Gnd. The actual output voltage V_out to supply of the radio communication interface, and possibly other circuit element of the consumption meter, is determined by means of a feedback loop connected between Vo and Fb, i.e. the voltage divider formed by resistors R18 and R19. The non-linear regulator chip NR is only active, when the enable input En is set to "high". Thus, with a low voltage on this enable input En, the non-linear regulator will enter a disabled state, i.e. an inactive state with a very low power consumption.

The current sensing element CSE described in connection with Fig. 1 is implemented with a single resistor R16 connected between supply voltage input of the radio communication interface (and possible other circuits) and supply input Vin of the non-linear regulator NR. A voltage across this resistor R16 is used as input to an electric switch Q1. The electric switch Q1 is further connected to control another electric switch Q3 which serves to connect/disconnect the feedback loop R18, R19 to electric ground. Thus, along with disabling the non-linear regulator NR, this power consuming feedback loop R18, R19 can also be disabled or disconnected, thereby saving power.

In a situation where the non-linear regulator NR is disabled, i.e. with a low current consumption of V_out, and a large current is required, e.g. by RF transmission of the radio communication interface (or another circuit connected to V_out), then the voltage across resistor R16 will increase, and accordingly the electronic switch Q1 will cause the enable input En to go "high" and thus enable the non-linear regulator NR. Accordingly, electronic switch Q3 will serve to connect the feedback loop R18, R19.

When the non-linear regulator NR is enabled, the supply voltage V_out will equal the scaled-down voltage Vo of the non-linear regulator, e.g. 50-75% of the battery voltage VB. When only a low current is drawn from the output V_out, the output voltage V_out will increase due to current through the by-pass resistor R16. Hereby, the voltage across R16 will decrease until the electric switch Q1 switches to off and thus disables the non-linear regulator. Thus, at very low current drains, the non-linear regulator NR is disabled, and R16 then serves to provide the battery voltage VB to the output V_out. At the same time, the capacitor C1 across the power supply output V_out will charge up to the battery voltage VB.

Thus, at low current requirements, the supply circuit will provide a supply voltage V_out equal to the battery voltage VB, while at high current requirements, the supply circuit will provide a supply voltage V_out equal to the output voltage Vo of the non-linear regulator NR.

To further save power in a disabled state of the non-linear regulator NR, one of its connections Vin or Gnd may be connected via an electronic switch controlled by the current sensing element CSE.
A peak current drawn from the battery B is reduced by de-coupling the battery B with capacitor C4 and resistor R20 to only a fraction of the peak current required by the radio communication interface. Altogether, the use of a voltage converter NR and the additional power consuming features described, results in a circuit design where the capacitor C4 can be rather small in size, and at the same time C4 can be implemented by a low cost component. Furthermore, the average current drawn by the battery is reduced, and thus the consumption meter will have an increased life-time with the same size of the battery B.

Although the present invention has been described in connection with preferred embodiments, it is not intended to be limited to the specific form set forth herein. Rather, the scope of the present invention is limited only by the accompanying claims.

In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Reference signs are included in the claims however the inclusion of the reference signs is only for clarity reasons and should not be construed as limiting the scope of the claims.

## Claims

1. A consumption meter arranged to measure an amount of a physical entity, the consumption meter including
- a flow sensing unit (FSU), arranged to perform a measurement on the physical entity, and to generate data (Q) representing an amount of flow accordingly,
- a radio communication interface (RCI) arranged to transmit a Radio Frequency signal representing the amount of the physical entity (Q),
- a battery (B) exhibiting a battery voltage (VB), wherein the battery (B) is arranged to generate electric supply power for the flow sensing unit (FSU) and the radio communication interface (RCI),
**characterized in that** the consumption meter further comprises a
- a voltage converter in the form of a non-linear regulator (NR) connected to the battery so as to convert the battery voltage (VB) to a second voltage (V2) being lower than the battery voltage (VB), the radio communication interface (RCI) being arranged for at least partly being powered by the second voltage (V2),
- a sensing element (CSE, R16) arranged to sense a current consumption of the radio communication interface (RCI)
wherein the sensing element (CSE, R16) is connected so as to disable the non-linear regulator (NR) upon the sensing element (CSE, R16) sensing a current consumption of the radio communication interface (RCI) being lower than a predetermined threshold value.

2. Consumption meter according to claim 1, wherein a voltage across the sensing element (CSE, R16), such as a single resistor (R16), is used to enable or disable the non-linear regulator (NR), such as by a voltage across the sensing element (CSE, R16) providing an input to an electric switch (Q1) connected to an enable input (En) of the non-linear regulator (NR).

3. Consumption meter according to any of claims 1-2, wherein the non-linear regulator (NR) is connected with a feedback loop (R18, R19) to provide the non-linear regulator (NR) with a feedback of the second voltage (V2, Vo, V_out), and wherein a current consumption of the feedback loop (R18, R19) is eliminated according with disablement of the non-linear regulator (NR), such as by means of an electric switch (Q3) controlled by the sensing element (CSE, R16).

4. Consumption meter according to any of the preceding claims, including an electrical by-pass connector (R16) arranged to by-pass the voltage converter (NR), such as an electrical by-pass connector (R16) connecting voltage input (Vin) and voltage output (Vo) of the voltage converter (NR).

5. Consumption meter according to claim 4, wherein the electrical by-pass connector includes a resistor (R16), such as the electrical by-pass connector being a single resistor (R16) connected between voltage input (Vin) and voltage output (Vo) of the non-linear regulator (NR).

6. Consumption meter according to claim 4 or 5, wherein the by-pass connector (R16) and the sensing element (CSE) are implemented with one or more common elements, such as implemented by a single resistor (R16) serving as by-pass connector and sensing element (CSE).

7. Consumption meter according to any of claims 4-6, wherein the by-pass connector (R16) is arranged to supply sufficient electric power to maintain a stand-by activity of the radio communication interface (RCI) in periods where the voltage converter (NR) is disabled.

8. Consumption meter according to any of the preceding claims, including a switch arranged to disconnect a supply voltage (Vin, Gnd) to the voltage converter, such as the switch being an electric switch operating according to an input from the sensing element (CSE, R16) defined in claim 3.

9. Consumption meter according to any of the preceding claims, including a linear regulator arranged to convert the second voltage (V2) to a third voltage being lower than the second voltage (V2), such a third voltage used for powering one or more low voltage circuits.

10. Consumption meter according to any of the preceding claims, wherein the flow sensing unit (FSU) and the radio communication interface (RCI) are powered by different supply voltages, such as the battery voltage (VB) and the second voltage (V2), respectively, and wherein the flow sensing unit (FSU) and the radio communication interface (RCI) are interconnected via a level shifter.

11. Consumption meter according to any of the preceding claims, wherein the voltage converter (NR) is arranged to generate supply power to at least one further element of the consumption meter, such as one of: a display, and an optical communication interface.

12. Consumption meter according to any of the preceding claims, wherein the flow sensing unit (FSU) is arranged for at least partly being powered by the second voltage (V2).

13. Consumption meter according to any of the preceding claims, wherein the radio communication interface (RCI) is operated in a discontinuous manner, such as operated in a manner requiring significant different supply current in different periods.

14. Consumption meter according to any of the preceding claims, wherein the second voltage (V2) is below 75% of the battery voltage (VB), such as below 50% of the battery voltage (VB), such as below 30% of the battery voltage (VB).

15. Consumption meter according to any of the preceding claims, wherein the flow sensing unit (FSU) is an ultrasonic flow sensing unit.

16. Consumption meter according to any of the preceding claims, being one of: a water meter, a heat meter, a cooling meter, and a gas meter.

## Patentansprüche

1. Verbrauchsmessgerät, angeordnet zum Messen einer Menge eines physikalischen Phänomens, wobei das Verbrauchsmessgerät umfasst
- eine Strömungserfassungseinheit (FSU), die zum Durchführen einer Messung des physikalischen Phänomens und zum Erzeugen von eine entsprechende Strömungsmenge darstellenden Daten (Q) angeordnet ist,
- eine Funkkommunikationsschnittstelle (RCI), die zum Übertragen eines die Menge des physikalischen Phänomens (Q) repräsentierenden Funkfrequenzsignals angeordnet ist,
- eine Batterie (B), die eine Batteriespannung (VB) aufweist, wobei die Batterie (B) zum Erzeugen einer elektrischen Versorgungsleistung für die Strömungserfassungseinheit (FSU) und die Funkkommunikationsschnittstelle (RCI) angeordnet ist.
**dadurch gekennzeichnet, dass** das Verbrauchsmessgerät weiterhin umfasst
- einen Spannungswandler in Form eines nicht linearen mit der Batterie verbundenen Reglers (NR) zur Umwandlung der Batteriespannung (BV) in eine zweite Spannung (V2), die niedriger ist als die Batteriespannung (BV), wobei die Funkkommunikationsschnittstelle (RCI) derart angeordnet ist, mindestens teilweise von der zweiten Spannung (V2) gespeist zu werden,
- ein Erfassungselement (CSE, R16), das zum Erfassen eines Stromverbrauchs der Funkkommunikationsschnittstelle (RCI) angeordnet ist,
wobei das Erfassungselement (CSE, R16) so verbunden ist, dass der nicht lineare Regler (NR) abgeschaltet wird, sobald das Erfassungselement (CSE, R16) einen Stromverbrauch der Funkkommunikationsschnittstelle (RCI) erfasst, die niedriger ist als ein vorbestimmter Schwellenwert.

2. Verbrauchsmessgerät nach Anspruch 1, wobei eine Spannung an dem Erfassungselement (CSE, R16), wie einem einzelnen Widerstand (R16), dazu verwendet wird, den nicht linearen Regler (NR) ein- oder auszuschalten, wie durch eine Spannung an dem Erfassungselement (CSE, R16), die eine Eingabe für einen elektrischen Schalter (Q1) bereitstellt, der an einen Einschalteingang (En) des nicht linearen Reglers angeschlossen ist.

3. Verbrauchsmessgerät nach einem der Ansprüche 1-2, wobei der nicht lineare Regler (NR) mit einer Rückkopplungsschleife (R18, R19) verbunden ist, um an dem nicht linearen Regler (NR) eine Rückkopplung der zweiten Spannung (V2, V_out) bereitzustellen und wobei ein Stromverbrauch der Rückkopplungsschleife (R18, R19) entsprechend dem Ausschalten des nicht linearen Reglers (NR) eliminiert wird, wie durch einen elektrischen Schalter (Q3), der von dem Erfassungselement (CSE, R16) gesteuert wird.

4. Verbrauchsmessgerät nach einem der vorhergehenden Ansprüche, das ein elektrisches Überbrückungsverbindungsglied (R16) einschließt, das zum Überbrücken des Spannungswandlers (NR) angeordnet ist, wie ein elektrisches Überbrückungsverbindungsglied (R16), das den Spannungseingang (Vin) und den Spannungsausgang (Vo) des Spannungswandlers (NR) verbindet.

5. Verbrauchsmessgerät nach Anspruch 4, wobei das elektrische Überbrückungsverbindungsglied einen Widerstand (R16) einschließt, wie das elektrische Überbrückungsverbindungsglied, das als einzelner Widerstand (R16) zwischen dem Spannungseingang (Vin) und dem Spannungsausgang (Vo) des nicht linearen Reglers (NR) angeschlossen ist.

6. Verbrauchsmessgerät nach Anspruch 4 oder 5, wobei das Überbrückungsverbindungsglied (R16) und das Erfassungselement (CSE) mit einem oder mehreren gemeinsamen Elementen implementiert sind, wie durch einen einzelnen Widerstand (R16) implementiert sind, der als Überbrückungsverbindungsglied und Erfassungselement (CSE) dient.

7. Verbrauchsmessgerät nach einem der Ansprüche 4-6, wobei das Überbrückungsverbindungsglied (R16) dazu angeordnet ist, in Zeiten, in denen der Spannungswandler (NR) abgeschaltet ist, zur Aufrechterhaltung einer Stand-by-Aktivität der Funkkommunikationsschnittstelle (RCI) ausreichende elektrische Leistung bereitzustellen.

8. Verbrauchsmessgerät nach einem der vorhergehenden Ansprüche, das einen Schalter einschließt, der zum Trennen einer Versorgungsspannung (Vin, Gnd) für den Spannungswandler angeordnet ist, wie der Schalter, der ein elektrischer Schalter ist, der gemäß einer Eingabe des gemäß Anspruch 3 definierten Erfassungselements (CSE, R16) betrieben wird.

9. Verbrauchsmessgerät nach einem der vorhergehenden Ansprüche, das einen linearen Regler einschließt, der zum Umwandeln der zweiten Spannung (V2) in eine dritte Spannung (V3), die niedriger ist als die zweite Spannung (V2), angeordnet ist, wie eine dritte Spannung, die zum Speisen einer oder mehrerer Niederspannungskreise verwendet wird.

10. Verbrauchsmessgerät nach einem der vorhergehenden Ansprüche, wobei die Strömungserfassungseinheit (FSU) und die Funkkommunikationsschnittstelle (RCI) von unterschiedlichen Versorgungsspannungen gespeist werden, wie der Batteriespannung (VB) bzw. der zweiten Spannung (V2), und wobei die Strömungserfassungseinheit (FSU) und die Funkkommunikationsschnittstelle (RCI) über einen Pegelumsetzer miteinander verbunden sind.

11. Verbrauchsmessgerät nach einem der vorhergehenden Ansprüche, wobei der Spannungswandler (NR) zum Erzeugen einer Versorgungsleistung für mindestens ein weiteres Element des Verbrauchsmessgeräts angeordnet ist, wie eines von: einer Anzeige und einer optischen Kommunikationsschnittstelle.

12. Verbrauchsmessgerät nach einem der vorhergehenden Ansprüche, wobei die Strömungserfassungseinheit (FSU) dazu angeordnet ist, mindestens teilweise von der zweiten Spannung (V2) gespeist zu werden.

13. Verbrauchsmessgerät nach einem der vorhergehenden Ansprüche, wobei die Funkkommunikationsschnittstelle (RCI) auf diskontinuierliche Weise betrieben wird, wie auf eine Art betrieben wird, die in unterschiedlichen Perioden einen signifikant unterschiedlichen Versorgungsstrom benötigt.

14. Verbrauchsmessgerät nach einem der vorhergehenden Ansprüche, wobei die zweite Spannung (V2) unter 75 % der Batteriespannung (VB) liegt, unter 50 % der Batteriespannung (VB), wie unter 30 % der Batteriespannung (VB).

15. Verbrauchsmessgerät nach einem der vorhergehenden Ansprüche, wobei die Strömungserfassungseinheit (FSU) eine Ultraschall-Strömungserfassungseinheit ist.

16. Verbrauchsmessgerät nach einem der vorhergehenden Ansprüche, das eines von Folgenden ist: ein Wasserzähler, ein Wärmezähler, ein Kältezähler und ein Gaszähler.

## Revendications

1. Compteur de consommation disposé pour mesurer une quantité d'une entité physique, le compteur de consommation comprenant :
- une unité de détection d'écoulement (FSU), disposée pour réaliser une mesure sur l'entité physique et pour générer des données (Q) représentant une quantité d'écoulement correspondante,
- une interface de radiocommunication (RCI) disposée pour transmettre un signal radiofréquence représentant la quantité de l'entité physique (Q),
- une batterie (B) possédant une tension de batterie (VB), la batterie (B) étant disposée pour générer une puissance d'alimentation électrique pour l'unité de détection d'écoulement (FSU) et l'interface de radiocommunication (RCI),
**caractérisé en ce que** le compteur de consommation comprend en outre
- un convertisseur de tension sous la forme d'un régulateur non linéaire (NR) raccordé à la batterie de manière à convertir la tension de batterie (VB) en une deuxième tension (V2) étant inférieure à la tension de batterie (VB), l'interface de radiocommunication (RCI) étant disposée pour être au moins en partie alimentée par la deuxième tension (V2),
- un élément de détection (CSE, R16) disposé pour détecter une consommation de courant de l'interface de radiocommunication (RCI),
dans lequel l'élément de détection (CSE, R16) est raccordé de manière à désactiver le régulateur non linéaire (NR) lorsque l'élément de détection (CSE, R16) détecte qu'une consommation de courant de l'interface de radiocommunication (RCI) est inférieure à une valeur seuil prédéterminée.

2. Compteur de consommation selon la revendication 1, dans lequel une tension sur l'élément de détection (CSE, R16), par exemple une résistance (R16) unique, est utilisée pour activer ou désactiver le régulateur non linéaire (NR), par exemple à l'aide d'une tension sur l'élément de détection (CSE, R16) délivrant une entrée à un commutateur électrique (Q1) raccordé à une entrée d'activation (En) du régulateur non linéaire (NR).

3. Compteur de consommation selon l'une quelconque des revendications 1 à 2, dans lequel le régulateur non linéaire (NR) est raccordé à une boucle de rétroaction (R18, R19) afin de délivrer au régulateur non linéaire (NR) une rétroaction pour la deuxième tension (V2, Vo, V_out), et dans lequel une consommation de courant de la boucle de rétroaction (R18, R19) est éliminée en cas de désactivation du régulateur non linéaire (NR), par exemple au moyen d'un commutateur électrique (Q3) commandé par l'élément de détection (CSE, R16).

4. Compteur de consommation selon l'une quelconque des revendications précédentes, comprenant un connecteur de dérivation (R16) électrique disposé pour contourner le convertisseur de tension (NR), par exemple un connecteur de dérivation (R16) électrique raccordant l'entrée de tension (Vin) à la sortie de tension (Vo) du convertisseur de tension (NR).

5. Compteur de consommation selon la revendication 4, dans lequel le connecteur de dérivation électrique comprend une résistance (R16), le connecteur de dérivation électrique étant par exemple une résistance (R16) unique raccordée entre l'entrée de tension (Vin) et la sortie de tension (Vo) du régulateur non linéaire (NR).

6. Compteur de consommation selon la revendication 4 ou 5, dans lequel le connecteur de dérivation (R16) et l'élément de détection (CSE) sont réalisés avec un ou plusieurs éléments communs, par exemple réalisés sous la forme d'une résistance (R16) unique jouant le rôle de connecteur de dérivation et d'élément de détection (CSE).

7. Compteur de consommation selon l'une quelconque des revendications 4 à 6, dans lequel le connecteur de dérivation (R16) est disposé de manière à fournir suffisamment de puissance électrique pour maintenir une activité de secours de l'interface de radiocommunication (RCI) pendant les périodes où le convertisseur de tension (NR) est désactivé.

8. Compteur de consommation selon l'une quelconque des revendications précédentes, comprenant un commutateur disposé de manière à déconnecter une tension d'alimentation (Vin, Gnd) du convertisseur de tension, le commutateur étant par exemple un commutateur électrique fonctionnant en fonction d'une entrée provenant de l'élément de détection (CSE, R16) défini dans la revendication 3.

9. Compteur de consommation selon l'une quelconque des revendications précédentes, comprenant un régulateur linéaire disposé pour convertir la deuxième tension (V2) en une troisième tension étant inférieure à la deuxième tension (V2), par exemple une troisième tension utilisée pour alimenter un ou plusieurs circuits basse tension.

10. Compteur de consommation selon l'une quelconque des revendications précédentes, dans lequel l'unité de détection d'écoulement (FSU) et l'interface de radiocommunication (RCI) sont alimentées par des tensions d'alimentation différentes, par exemple la tension de batterie (VB) et la deuxième tension (V2), respectivement, et dans lequel l'unité de détection d'écoulement (FSU) et l'interface de radiocommunication (RCI) sont interconnectées via un translateur de niveau.

11. Compteur de consommation selon l'une quelconque des revendications précédentes, dans lequel le convertisseur de tension (NR) est disposé pour générer une puissance d'alimentation destinée à au moins un autre élément du compteur de consommation, tel que l'un des éléments suivants : un afficheur et une interface de communication optique.

12. Compteur de consommation selon l'une quelconque des revendications précédentes, dans lequel l'unité de détection d'écoulement (FSU) est disposée pour être au moins en partie alimentée par la deuxième tension (V2).

13. Compteur de consommation selon l'une quelconque des revendications précédentes, dans lequel l'interface de radiocommunication (RCI) est utilisée de manière discontinue, par exemple utilisée d'une manière nécessitant un courant d'alimentation substantiellement différent à différentes périodes.

14. Compteur de consommation selon l'une quelconque des revendications précédentes, dans lequel la deuxième tension (V2) est inférieure à 75 % de la tension de batterie (VB), par exemple inférieure à 50 % de la tension de batterie (VB), par exemple inférieure à 30 % de la tension de batterie (VB).

15. Compteur de consommation selon l'une quelconque des revendications précédentes, dans lequel l'unité de détection d'écoulement (FSU) est une unité de détection d'écoulement à ultrasons.

16. Compteur de consommation selon l'une quelconque des revendications précédentes, étant de l'un des types suivants : compteur d'eau, compteur de chaleur, compteur de refroidissement et compteur de gaz.
